# EUROPEAN PATENT APPLICATION

(11) **EP 4 502 447 A1**
(43) Date of publication of application: **05.02.2025**
(21) Application number: 23773601.2
(22) Date of filing: 06.03.2023
(51) Int. Cl.: F16M 11/04

(54) **MOUNTING BASE AND VEHICLE**

(30) Priority: 25.03.2022 CN 202220679787 U
(71) Applicant: Beijing Chehejia Automobile Technology Co., Ltd., Beijing 101300 (CN)
(72) Inventor: ZHAO, Zhenfeng, Beijing 101300 (CN); LI, Long, Beijing 101300 (CN); JIN, Beili, Beijing 101300 (CN)
(74) Representative: Maiwald GmbH
(86) International application number: PCT/CN2023/079899
(87) International publication number: WO 2023/179350

(57) **Abstract**

A mounting base. The mounting base comprises a body and an aftermarket installed product mounting portion and a vehicle body connection portion provided on two opposite sides of the body; the vehicle body connection portion is matched with a mounting position provided on a vehicle body; accommodation cavities are formed in the body; the vehicle body connection portion is provided with a connection structure; and the connection structure is rotatably connected to the body and can be accommodated in the accommodation cavities. When the connection structure is not used, the connection structure is accommodated in the accommodation cavities, such that the connection structure is not prone to being damaged, the possibility that assembly is not firm due to damage of the connection structure can be reduced, and the aftermarket installed product provided with the mounting base is not prone to being damaged.

## Description

### CROSS-REFERENCE TO RELATED APPLICATION

This application is based on and claims priority to Chinese Patent Application No. 202220679787.9, filed on March 25, 2022, the entire content of which is incorporated herein by reference.

### FIELD

The present disclosure relates to the field of vehicles, and more particularly to a mounting base and a vehicle.

### BACKGROUND

With the development of society, a user of a vehicle has an increasing demand for personalization and multi-scenario use. The vehicle will become a second living room of people, and a cockpit will become an extension of the family. The user will choose more aftermarket products to enhance the sense of living at home and the sense of science and technology of the cockpit. However, there are various types of aftermarket products on the market at present, and a fixed structure used for assembling is generally exposed, so that it is inconvenient to store the aftermarket product, and the aftermarket product is prone to being damaged, thus resulting in unstable assembling.

### SUMMARY

In order to solve the above technical problems, embodiments of the present disclosure provide a mounting base and a vehicle.

A first aspect of the present disclosure provides a mounting base. The mounting base includes a body and an aftermarket product mounting portion and a vehicle body connection portion arranged on two opposite sides of the body. The vehicle body mounting portion matches with a mounting position arranged in a vehicle body. The body has an accommodating cavity, the vehicle body connection portion is provided with a connection structure, and the connection structure is rotatably connected to the body and configured to be accommodated in the accommodating cavity.

Further, the connection structure includes a locking hook assembly corresponding to the accommodating cavity. The locking hook assembly includes a locking hook and a linkage rod, the locking hook is rotatably connected with the body and configured to be accommodated in the accommodating cavity. The linkage rod is connected with the locking hook for driving the locking hook to rotate.

Further, the accommodating cavity includes a first accommodating cavity and a second accommodating cavity; the locking hook assembly includes a first locking hook and a second locking hook, the first locking hook is rotatably arranged in the first accommodating cavity, and the second locking hook is rotatably arranged in the second accommodating cavity; and the linkage rod is connected with the first locking hook and the second locking hook, respectively.

Further, an axial direction of rotation of the first locking hook and an axial direction of rotation of the second locking hook are parallel; or, an axial direction of rotation of the first locking hook and an axial direction of rotation of the second locking hook are perpendicular to each other.

Further, two ends of the linkage rod are rotatably connected with the first locking hook and the second locking hook, respectively.

Further, the first locking hook is provided with a first rotating shaft, the first rotating shaft is rotatably connected with the body, the first locking hook is provided with a first gear, the linkage rod is provided with a first rack, and the first gear meshes with the first rack; and/or, the second locking hook is provided with a second rotating shaft, the second rotating shaft is rotatably connected with the body, the second locking hook is provided with a second gear, the linkage rod is connected with a second rack, and the second gear meshes with the second rack.

Further, a reversing structure is arranged between the linkage rod and the second locking hook; the reversing structure includes a lateral chute defined in the linkage rod, and an extending direction of the lateral chute is inclined relative to a moving direction of the linkage rod; and the second rack is provided with a guide column slidably fitted with the lateral chute.

Further, the mounting base further includes an electrical connecting member configured to be electrically connected with a vehicle body end; and the electrical connecting member is arranged to a first rotating shaft of the first locking hook, and/or, the electrical connecting member is arranged to a second rotating shaft of the second locking hook.

Further, the body is provided with a first rotating bracket rotatably connected with the body, and the electrical connecting member and the first locking hook are arranged on the first rotating bracket; and/or the body is provided with a second rotating bracket rotatably connected with the body, and the electrical connecting member and the second locking hook are arranged on the second rotating bracket.

A second aspect of the present disclosure provides a vehicle, including the mounting base.

The technical solution according to embodiments of the present disclosure has the following advantages compared with the related art.

In the mounting base according to the embodiments of the present disclosure, the mounting base includes the body and the aftermarket product mounting portion and the vehicle body connection portion arranged on two opposite sides of the body, the vehicle body mounting portion matches with the mounting position arranged in the vehicle body, the body has the accommodating cavity, the vehicle body connection portion is provided with the connection structure, and the connection structure is rotatably connected with the body and configured to be accommodated in the accommodating cavity. When the connection structure is not used, the connection structure is stored in the accommodating cavity, such that the connection structure is not prone to being damaged, and the possibility that assembling is not firm due to damage of the connection structure can be reduced.

### BRIEF DESCRIPTION OF THE DRAWINGS

The drawings herein are incorporated into the specification and form a part of the specification, show embodiments that comply with the present disclosure, and are used to explain the principles of the present disclosure together with the specification.

In order to more clearly explain the technical solution of embodiments of the present disclosure or the related art, the drawings required to be used in the description of the embodiments or the related art will be briefly described below, and it is obvious that for those skilled in the art, other drawings can be obtained according to these drawings without creative labor.
Fig. 1 is a schematic view of a base according to an embodiment of the present disclosure.
Fig. 2 is a schematic view of a mounting base in a base according to an embodiment of the present disclosure.
Fig. 3 is a schematic view of a mounting base in a base according to an embodiment of the present disclosure, in which a first locking hook and a second locking hook protrude out.
Fig. 4 is a schematic view of a mounting base in a base according to an embodiment of the present disclosure, in which a first locking hook and a second locking hook are stored.

References signs: 1 body; 11 first accommodating cavity; 12 second accommodating cavity; 13 electrical connecting member; 14 first rotating bracket; 15 second rotating support; 16 fixed base; 21 first locking hook; 211 first gear; 22 second locking hook; 221 second gear; 23 linkage rod; 231 lateral chute; 24 second rack; 241 guide column; 25 first spring; 26 second spring; 3 bracket; 31 locking mechanism; 32 unlocking mechanism; 34 cable; 4 aftermarket product.

### DETAILED DESCRIPTION

In order to more clearly understand the purposes, features and advantages of the present disclosure, embodiments of the present disclosure will be further described below. It should be noted that the embodiments of the present disclosure and the features in the embodiments can be combined with each other without conflict.

In order to fully understand the present disclosure, many specific details are explained in the following description, but the present disclosure can also be implemented in other ways different from those described here. Obviously, the embodiments in the description are only a part of embodiments of the present disclosure, instead of all of them.

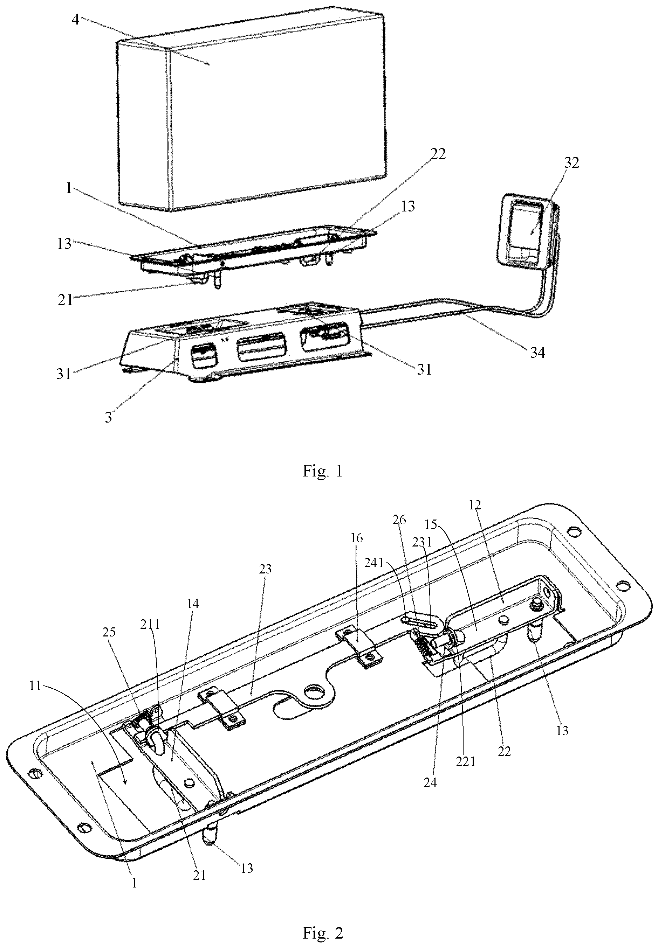

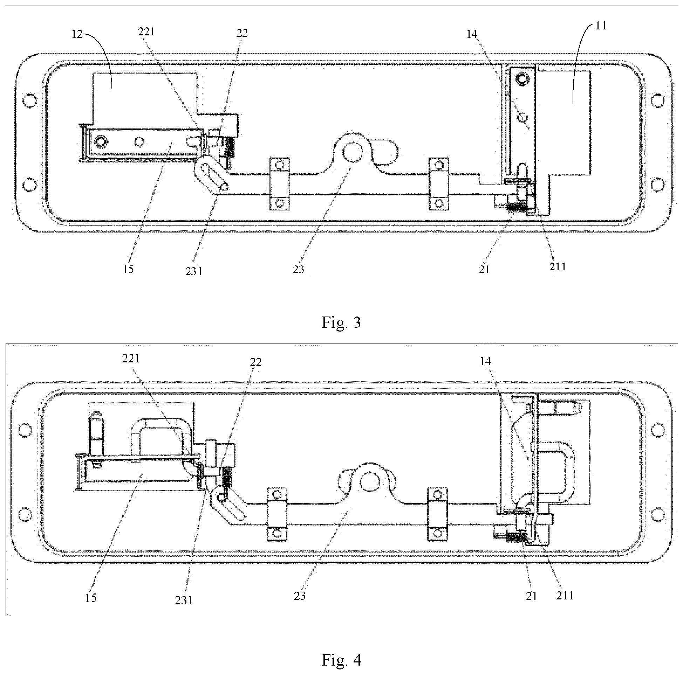

As shown in Figs. 1 to 4, in a body 1 according to an embodiment of the present disclosure, a mounting base includes the body 1 and an aftermarket product mounting portion and a vehicle body connection portion arranged on two opposite sides of the body 1, the vehicle body mounting portion matches with a mounting position arranged in a vehicle body, an accommodating cavity is formed in the body 1, the vehicle body connection portion is provided with a connection structure, and the connection structure is rotatably connected to the body 1 and can be accommodated in the accommodating cavity. When the connection structure is not used, the connection structure is stored in the accommodating cavity, such that the connection structure is not prone to being damaged, the possibility that assembling is not firm due to damage of the connection structure can be reduced, and the aftermarket product 4 provided with the body 1 is not prone to being damaged. In the embodiment of the present disclosure, by arranging the body 1 in the aftermarket product 4, different structures of the aftermarket product 4 can be converted into a standard structure with the body 1, which can provide a standard-sized structure for the aftermarket product 4, thus realizing that all the aftermarket products 4 can be quickly mounted on the vehicle body. The mounting base according to the embodiment of the present disclosure can be mounted at a bottom of each aftermarket product 4, so that the base serves as part of the aftermarket product 4, to realize the standardization of a mounting structure of the aftermarket product 4.

In some specific embodiments, the connection structure includes a locking hook assembly corresponding to the accommodating cavity, the locking hook assembly includes a locking hook and a linkage rod 23, the locking hook is rotatably connected with the body 1 and can be accommodated in the accommodating cavity, and the linkage rod 23 is connected with the locking hook for driving the locking hook to rotate. The linkage rod 23 is configured to drive the locking hook to be arranged in the accommodating cavity. When the locking hook is not used, the linkage rod 23 drives the locking hook to be stored in the accommodating cavity, so that the locking hook is not prone to being damaged, the possibility that assembling is not firm due to damage of the locking hook can be reduced, and the aftermarket product 4 provided with the body 1 is not prone to being damaged.

One, or two, or a plurality of locking hooks may be provided.

In some specific embodiments, the body 1 is provided with the locking hook assembly and an electrical connecting member 13, the locking hook assembly is configured to be detachably connected with the vehicle body, and the electrical connecting member 13 is configured to be electrically connected with a vehicle body end. In the embodiment of the present disclosure, by the fit between the body 1 and the aftermarket product 4, different structures of the aftermarket product 4 can be converted into a standard structure with the body 1, which can provide a standard-sized structure for the aftermarket product 4, realizing that all the aftermarket products 4 can be quickly mounted in the vehicle body. The electrical connecting member 13 can provide an interface for power supply, and with the electrical connecting member 13 being electrically connected with the vehicle body end, the power and signal in the vehicle can be directly transmitted to the aftermarket product 4. The mounting base according to the embodiment of the present disclosure can be mounted at the bottom of each aftermarket product 4, so that the base serves as part of the aftermarket product 4, to realize the standardization of the mounting structure of the aftermarket product 4.

Optionally, the electrical connecting member 13 and the base may be connected by welding.

Referring to Fig. 1, Fig. 3 and Fig. 4, a first accommodating cavity 11 and a second accommodating cavity 12 are formed in the body 1, the locking hook assembly includes a first locking hook 21, a second locking hook 22 and the linkage rod 23, the first locking hook 21 is rotatably arranged in the first accommodating cavity 11, the second locking hook 22 is rotatably arranged in the second accommodating cavity 12, and the linkage rod 23 is connected with the first locking hook 21 and the second locking hook 22, respectively.

The first locking hook 21 and the second locking hook 22 can be rotated and stored, so that the first locking hook 21 and the second locking hook 22 are completely accommodated inside the body 1. When there is no need to mount the aftermarket product 4 on the vehicle body, the first locking hook 21 and the second locking hook 22 are accommodated in the first accommodating cavity 11 and the second accommodating cavity 12, respectively, and the linkage rod 23 is configured to drive the first locking hook 21 and the second locking hook 22, so that the first locking hook 21 and the second locking hook 22 are correspondingly accommodated in the first accommodating cavity 11 and the second accommodating cavity 12 at the same time, respectively, and thus the aftermarket product 4 can keep a better appearance.

Optionally, the aftermarket product 4 may be household appliances or electronic devices and so on.

In some specific embodiments, the electrical connecting member 13 is arranged to a first rotating shaft of the first locking hook 21, and/or the electrical connecting member 13 is arranged to a second rotating shaft of the second locking hook 22.

Optionally, two electrical connecting members 13 are provided, i.e. a first electrical connecting member 13 and a second electrical connecting member 13, and the first electrical connecting member 13 and the first locking hook 21 are both arranged on a first rotating bracket 14. Specifically, the first electrical connecting member 13 and the first locking hook 21 are respectively welded with the first rotating bracket 14, so that the first electrical connecting member 13 and the first locking hook 21 are capable of rotating relative to the body 1 simultaneously, and the first electrical connecting member 13 and the first locking hook 21 are capable of being accommodated in the first accommodating cavity 11 simultaneously. The second electrical connecting member 13 and the second locking hook 22 are arranged on a second rotating bracket 15, and the second electrical connecting member 13 and the second locking hook 22 are respectively connected with the second rotating bracket 15 by welding, so that the second electrical connecting member 13 and the second locking hook 22 are capable of rotating relative to the body 1 simultaneously, and the second electrical connecting member 13 and the second locking hook 22 are capable of being accommodated in the second accommodating cavity12 simultaneously. The first locking hook 21 and the second locking hook 22 can be arranged in two different directions, so as to eliminate gaps in a left-right direction and a front-rear direction.

In some specific embodiments, the first locking hook 21 is provided with the first rotating shaft, the first rotating shaft is rotatably connected with the body 1, an adjusting mechanism includes a first gear 211 and a first rack meshing with each other, the first gear 211 is arranged on the first locking hook 21, and the first rack is arranged on the linkage rod 23; and/or, the second locking hook 22 is provided with the second rotating shaft, the second rotating shaft is rotatably connected with the body 1, an adjusting mechanism includes a second gear 221 and a second rack 24 meshing with each other, the second gear 221 is arranged on the second locking hook 22, and the second rack 24 is arranged on the linkage rod 23. The first rotating bracket 14 and the second rotating bracket 15 may be respectively arranged on the body 1 and may rotate around a hole in the body 1. The first rotating bracket 14 is connected with the body 1 through a first spring 25, to provide a restoring force for the first locking hook 21 in a use state and a storage state, and eliminate the gap and shaking. The second rotating bracket 15 is connected with the body 1 through a second spring 26, to provide a restoring force for the second locking hook 22 in a use state and a storage state, and eliminate the gap and shaking.

The linkage rod 23 is connected with the first locking hook 21 and the second locking hook 22, respectively. The linkage rod 23 is configured to drive the first locking hook 21 and the second locking hook 22, so that the first locking hook 21 is accommodated in the first accommodating cavity 11, and the second locking hook 22 is accommodated in the second accommodating cavity 12. When the aftermarket product 4 does not need to be mounted on the vehicle body, the linkage rod 23 drives the first locking hook 21 and the second locking hook 22 to be respectively accommodated in the first accommodating cavity 11 and the accommodating cavity 12, so that the aftermarket product 4 can keep a better appearance. When the aftermarket product 4 needs to be mounted on the vehicle body, the linkage rod 23 drives the first locking hook 21 and the second locking hook 22 to respectively protrude out from the first accommodating cavity 11 and the second accommodating cavity 12. The operation is simple, and the retraction and extension are convenient.

The linkage rod 23 may pass through a gap between a fixed base 16 and the body 1, so that the linkage rod 23 slides relative to the body 1 to drive the first locking hook 21 and the second locking hook 22.

The body 1 can be mounted together with a body structure of the aftermarket product 4 through four round holes at an edge of the body 1, to form a complete aftermarket product 4.

In some specific embodiments, an axial direction of rotation of the first locking hook 21 and an axial direction of rotation of the second locking hook 22 are parallel; or, an axial direction of rotation of the first locking hook 21 and an axial direction of rotation of the second locking hook 22 are perpendicular to each other. When the axial direction of rotation of the first locking hook 21 and the axial direction of rotation of the second locking hook 22 are perpendicular to each other, the gaps in the left-right direction and the front-rear direction can be eliminated, and the possibility of shaking is reduced.

In some specific embodiments, two ends of the linkage rod 23 are rotatably connected with the first locking hook 21 and the second locking hook 22, respectively. When the user needs to mount the aftermarket product 4 on the vehicle body, the linkage rod 23 can be toggled, so that the first locking hook 21 and the second locking hook 22 protrude out. When the user detaches the aftermarket product 4 from the vehicle body, the first locking hook 21 and the second locking hook 22 need to be stored, and the linkage rod 23 can be toggled. The structure is simple, and the operation is convenient.

In some specific embodiments, the first locking hook 21 is provided with the first rotating shaft, the first rotating shaft is rotatably connected with the body 1, the first locking hook 21 is provided with the first gear 211, the linkage rod 23 is provided with the first rack, and the first gear 211 meshes with the first rack. When the linkage rod 23 moves, the fit between the first rack and the first gear 211 can drive the first rotating bracket 14 and the first locking hook 21 to rotate 90 degrees.

In some specific embodiments, the second locking hook 22 is provided with the second rotating shaft, the second rotating shaft is rotatably connected with the body 1, the second locking hook 22 is provided with the second gear 221, the linkage rod 23 is connected with the second rack 24, and the second gear 221 meshes with the second rack 24. When the linkage rod 23 moves, the fit between the second rack 24 and the second gear 221 can drive the second rotating bracket 15 and the second locking hook 22 to rotate 90 degrees.

In some specific embodiments, a reversing structure is provided between the linkage rod 23 and the second locking hook 22. By the reversing structure, when the linkage rod 23 moves, the first locking hook 21 and the second locking hook 22 can rotate in different directions.

In some specific embodiments, the reversing structure includes a lateral chute 231 formed in the linkage rod 23, and an extending direction of the lateral chute 231 is inclined relative to a moving direction of the linkage rod 23. The second rack 24 is provided with a guide column 241 slidably fitted with the lateral chute 231. When the linkage rod 23 moves, the lateral chute 231 drives the guide column 241 to make a linear motion, a portion of the second rack 24 fitted with the second locking hook 22 is a tooth-shaped structure, and a protruding end of the second locking hook 22 is the second gear 221 structure. When the guide column 241 slides, the fit between the tooth-shaped structure of the second rack 24 and the second gear 221 drives the second rotating bracket 15 to rotate 90 degrees.

As shown in Fig. 1, the base further includes a bracket 3 connected with the vehicle body and provided with a locking device and an electrical connector, and the electrical connector is configured to be electrically connected with the vehicle body end. The locking device may be manually controlled, and may also be electrically controlled. The locking device includes a locking mechanism 31 and an unlocking mechanism 32, the locking mechanism 31 is configured to lock the locking hook assembly, and the unlocking mechanism 32 is configured to unlock the locking mechanism 31. The electrical connector is configured to be connected with the electrical connecting member 13 when the locking structure locks the locking hook assembly, which can provide safe fixation as well as convenient disassembling and assembling for the aftermarket product 4, and satisfy the functional expansion demand of the user for the cockpit. The electrical connector is configured to provide a power supply function for the aftermarket product 4. The electrical connector is configured to be connected with the aftermarket product 4 when the locking structure locks the aftermarket product 4, which can provide power and communication support for the aftermarket product 4, make the function expansion for the user more convenient, and ensure that the cockpit is more safe in the function expansion scene.

In some specific embodiments, the locking device includes a cable 34, one end of the cable 34 is connected with the locking mechanism 31, and the other end of the cable 34 is connected with the unlocking mechanism 32, so that the locking mechanism 31 is unlocked when the unlocking mechanism 32 pulls the cable 34. The unlocking mechanism 32 includes an unlocking hand buckle that can unlock the locking mechanism 31, thus realizing the fast disassembling of the aftermarket product 4. The locking mechanism 31 includes an unlocking block, one end of the cable 34 is connected with the unlocking hand buckle, the other end of the cable 34 is connected with the unlocking block, and the unlocking hand buckle can drive the cable 34 when rotating, and drive the unlocking block to unlock by the cable 34.

A vehicle according to an embodiment of the present disclosure includes the mounting base according to the embodiment of the present disclosure. Since the vehicle according to the embodiment of the present disclosure has the same advantages as the mounting base according to the embodiment of the present disclosure, it is not repeated herein.

It should be noted that in the present disclosure, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, method, article, or device including a series of elements includes not only those elements, but also other elements that are not expressly listed, or also includes elements inherent in such process, method, article, or device. Without further limitation, an element defined by the phrase "including a ..." does not exclude the presence of additional identical elements in the process, method, article or device including the element.

The above description is only the specific embodiment of the present disclosure, so that those skilled in the art can understand or implement the present disclosure. Various modifications to these embodiments will be apparent to those skilled in the art, and the general principles defined herein may be implemented in other embodiments without departing from the scope of the present disclosure. Therefore, the present disclosure will not be limited to the embodiments described herein, but is to conform to the widest scope consistent with the principles and novel features disclosed herein.

## Claims

1. A mounting base, comprising a body and an aftermarket product mounting portion and a vehicle body connection portion arranged on two opposite sides of the body, and the vehicle body mounting portion matching with a mounting position arranged in a vehicle body,
wherein the body has an accommodating cavity, the vehicle body connection portion is provided with a connection structure, and the connection structure is rotatably connected to the body and is configured to be accommodated in the accommodating cavity.

2. The mounting base according to claim 1, wherein the connection structure comprises a locking hook assembly corresponding to the accommodating cavity,
wherein the locking hook assembly comprises a locking hook and a linkage rod, the locking hook is rotatably connected with the body and is configured to be accommodated in the accommodating cavity, and the linkage rod is connected with the locking hook for driving the locking hook to rotate.

3. The mounting base according to claim 2, wherein the accommodating cavity comprises a first accommodating cavity and a second accommodating cavity;
the locking hook assembly comprises a first locking hook and a second locking hook, the first locking hook is rotatably arranged in the first accommodating cavity, and the second locking hook is rotatably arranged in the second accommodating cavity; and
the linkage rod is connected with the first locking hook and the second locking hook, respectively.

4. The mounting base according to claim 3, wherein an axial direction of rotation of the first locking hook and an axial direction of rotation of the second locking hook are parallel; or
an axial direction of rotation of the first locking hook and an axial direction of rotation of the second locking hook are perpendicular to each other.

5. The mounting base according to claim 4, wherein two ends of the linkage rod are rotatably connected with the first locking hook and the second locking hook, respectively.

6. The mounting base according to claim 5, wherein the first locking hook is provided with a first rotating shaft, the first rotating shaft is rotatably connected with the body, the first locking hook is provided with a first gear, the linkage rod is provided with a first rack, and the first gear meshes with the first rack; and/or
the second locking hook is provided with a second rotating shaft, the second rotating shaft is rotatably connected with the body, the second locking hook is provided with a second gear, the linkage rod is connected with a second rack, and the second gear meshes with the second rack.

7. The mounting base according to claim 6, wherein a reversing structure is arranged between the linkage rod and the second locking hook;
the reversing structure comprises a lateral chute defined in the linkage rod, and an extending direction of the lateral chute is inclined relative to a moving direction of the linkage rod; and
the second rack is provided with a guide column slidably fitted with the lateral chute.

8. The mounting base according any one of claims 4 to 7, further comprising an electrical connecting member configured to be electrically connected with a vehicle body end,
wherein the electrical connecting member is arranged to a first rotating shaft of the first locking hook, and/or, the electrical connecting member is arranged to a second rotating shaft of the second locking hook.

9. The mounting base according to claim 8, wherein the body is provided with a first rotating bracket rotatably connected with the body, and the electrical connecting member and the first locking hook are arranged on the first rotating bracket; and/or
the body is provided with a second rotating bracket rotatably connected with the body, and the electrical connecting member and the second locking hook are arranged on the second rotating bracket.

10. A vehicle, comprising a mounting base according to any one of claims 1-9.
